(19) **Europäisches Patentamt**

**European Patent Office**

**Office européen des brevets**

(11) **EP 1 666 545 A1**

(12) **EUROPEAN PATENT APPLICATION**
published in accordance with Art. 158(3) EPC

(43) Date of publication:
**07.06.2006 Bulletin 2006/23**

(51) Int Cl.:
*C09C 1/62* (1968.09)          *C09D 5/03* (1985.01)
*C09D 5/30* (1968.09)

(21) Application number: **04771651.9**

(22) Date of filing: **13.08.2004**

(86) International application number:
**PCT/JP2004/011684**

(87) International publication number:
**WO 2005/019350 (03.03.2005 Gazette 2005/09)**

(84) Designated Contracting States:
**AT BE BG CH CY CZ DE DK EE ES FI FR GB GR
HU IE IT LI LU MC NL PL PT RO SE SI SK TR**

(30) Priority: **21.08.2003 JP 2003297602**

(71) Applicant: **TOYO ALUMINIUM KABUSHIKI
KAISHA
Osaka-shi, Osaka 541-0056 (JP)**

(72) Inventor: **NIIZAKI, Touru,
TOYO ALUMINIUM KABUSHIKI KAISHA
Osaka-shi,
Osaka 5410056 (JP)**

(74) Representative: **GROSSE BOCKHORNI
SCHUMACHER
Patent- und Rechtsanwälte
Forstenrieder Allee 59
81476 München (DE)**

(54) **FLAKE PIGMENT HAVING FILM CONTAINING CHARGE REGULATING AGENT, POWDER METALLIC PAINT CONTAINING IT, COATING USING IT AND PROCESS FOR PRODUCING FLAKE PIGMENT**

(57)     The invention provides a powder metallic coating material containing a flake pigment, which comprises base particles having flaky shape and a film containing a charge control agent on surfaces of the base particles, and a resin powder. It is preferable that relation between a charge value of the flake pigment and a charge value of the resin powder is defined by the following expressions (1) and (2):

$$\left| C_R - C_A \right| \leq 10 \quad \bullet \bullet \bullet (1)$$

$$10 \leq \left| C_A \right| \leq 40 \bullet \bullet \bullet (2)$$

In the expressions (1) and (2), $C_A$ denotes the charge value ($\mu$C/g) of the flake pigment and $C_R$ denotes the charge value ($\mu$C/g) of the resin powder.

EP 1 666 545 A1

## Description

### Technical Field

The invention relates to a flake pigment to be used for a powder coating material. More particularly, the invention relates to an innovative flake pigment with controlled charge value for exhibiting and maintaining excellent brightness and metallic effect.

The invention also relates to a powder metallic coating material containing the flake pigment. Further, the invention relates to a coating obtained from the powder metallic coating material containing the flake pigment. Still further, the invention relates to a production method of the flake pigment.

### Background Art

The demands for powder coating materials have been increased for automotive parts, electronic products, furniture, processing machines, office machines, toys and the like as low-pollution coating materials using no organic solvent. Coatings of powder coating materials are low-pollution type and the thickness of the coatings applied one time is thick and unlike conventional solvent type coating materials, they are no need to be applied repeatedly and therefore, the coating time can be shortened. Further, since no solvent is contained in them, the powder coating materials are advantageous in a point that no pin hole is formed in the coatings. With respect to the powder coating materials having the above-mentioned characteristics, the coating characteristics are excellent and are not particularly problematic in the case a flake pigment of such as aluminum is not contained therein.

However, in the case of using the powder coating materials for metallic coat finishing containing a flake pigment, it is difficult to arrange the flake pigment in parallel to a substrate, so that the color tone becomes dark and sufficient metallic effect cannot be obtained. Therefore, to overcome the disadvantage of such powder metallic coating materials, various investigations and efforts for development have been performed in many fields.

As a conventional production method of a powder metallic coating material, there are a melt blend method of sufficiently kneading a metal flake pigment with a resin and a coloring pigment beforehand by melting and then powdering the mixture by pulverization; a bonded method of using a resin powder having a surface to which a metal flake pigment is adhered; and a dry blend method of mixing a resin powder and a flake pigment and applying them (e.g. reference to Patent Document 1, Patent Document 2, Patent Document 3, and Patent Document 4).

However, in the melt blend method, the flake pigment tends to be deformed in the kneading step and the particle size adjustment step for powdering the resin by pulverization carried out thereafter. Therefore, it cannot be said that the appearance of the coatings formed by applying the powder metallic coating material produced by this method is sufficiently good. Further, in this production method, in the case aluminum particles are used as the flake pigment, there is a problem that a risk of ignition and powder explosion is increased since the active aluminum surface is exposed in the pulverization step.

The bonded method may include a method of adhering a flake pigment to the resin powder surface by a brush polisher and a method of bringing resin powder into contact with dispersion media such as alumina balls coated with a flake pigment, and transferring and bonding the pigment to the resin powder. In the method, the introduction ratio of the flake pigment in the coating is stabilized and the powder metallic coating material which is not adhered to a substrate can advantageously be recovered and used again.

However, in this bonded method, since the flake pigment and the resin powder are pressure-bonded by physical stress, the flake pigment tends to be deformed easily and an excellent metallic effect is difficult to obtain. Further, although it is advantageous that the bonding (blocking) of resin particles hardly takes place since the bonding strength is weak, bonding of the flake pigment entirely to the resin powder is very difficult and a large quantity of particles of free flake pigment which are not bonded to the resin remain.

If the free flake pigment increases, owing to the difference of the adhesion efficiency, the mixing ratio of the resin powder and the flake pigment is changed in the case the coating material is recovered and reused, and consequently it becomes impossible to reuse the recovered coating material. In the case of using a metal pigment such as aluminum particles as the flake pigment, since a large quantity of free flake pigment exists, the risk of ignition and powder explosion is increased.

That the bonding power between the resin powder and the flake pigment becomes weak is particularly significant in the case the particle diameter of the flake pigment is larger and excellent luster and high brightness attained solely owing to use of the flake pigment with such a large particle size cannot be obtained by using bonded aluminum.

The dry blend method has an advantageous point that deformation of the flake pigment is not caused relatively so much. However, since the charging ratios of the flake pigment and the resin powder differ from each other, the separation phenomenon of the resin powder and the flake pigment takes place easily at the time of coating. Therefore, the design property of the coating is lowered and since the content of the flake pigment in the powder metallic coating material changes before and after coating, similarly to the above-mentioned bonded method in the case the quantity of the free flake pigment is high, the color tone is changed if the recovered coating material is reused and it makes recycling of the coating material practically impossible. Also, in the case of the dry blend method, coating lumps, so-called spits, nucleating the flake pigment may possible be formed. This phenomenon occurs attributed to that adhesion and accumulation of the flake pigment such as aluminum flakes is caused in the peripheral parts of electrodes of an electrostatic coating apparatus and finally the flakes in form of the lumps adhere to the coating to form the lumps in the case the electrostatic coating is continued for a long time.

In the case an acrylic resin powder is used for the powder coating material, even if any of the above-mentioned melt blend method, bonded method, and dry blend method is used, the adhesion efficiency of the flake pigment to an object to be coated is low regardless of the existence of the flake pigment and therefore, as compared with the case of using a polyester type resin powder, a substrate cannot be hidden unless unnecessary excess coating is repeated.

Further, conventionally, in the field of a powder coating material other than a metallic coating material, to solve uneven hue, uneven inferior impression, and gradation failure in the case of coating with the powder coating material with a plurality of different colors by the dry blend method, methods of adjusting the charge values of the respective color powder coating materials are disclosed (reference to Patent Document 5 and Patent Document 6).

However, even if such conventional methods are applied to the powder metallic coating material, the uneven hue, uneven inferior impression, and gradation failure cannot be solved well and particularly in the case of the powder metallic coating material using the acrylic resin powder, a substrate cannot be hidden unless unnecessary excess coating is repeated.

As described above, there are various kinds of production methods of a flake pigment for a powder metallic coating material and a powder metallic coating material containing the same, however any one of those methods is insufficient to provide a flake pigment excellent in a recycling property, scarcely risky, and satisfactory in terms of the color tone, metallic effect, and brightness, a powder metallic coating material containing such a flake pigment and a resin powder, and a coating of the coating material.

Patent Document 1: Japanese Patent Laying-Open No. 51-137725
Patent Document 2: Japanese Patent Publication No. 57-35214
Patent Document 3: Japanese Patent Laying-Open No. 9-71734
Patent Document 4: US Patent No. 4,138,511
Patent Document 5: Japanese Patent Laying-Open No. 10-72557
Patent Document 6: Japanese Patent Laying-Open No. 11-293161

**Disclosure of the Invention**

**Problems to be Solved by the Invention**

One aim of the invention is to provide a flake pigment preferably usable for a powder coating material and for dry blend to give excellent metallic effect and high brightness to a coating.

Another aim of the invention is to provide a powder metallic coating material for dry blend by which the flake pigment and the resin powder are scarcely separated at the time of coating and the content alteration of the flake pigment is suppressed before and after the coating and which is excellent in the recycling property and capable of hiding substrate by aluminum flakes with no need of unnecessary repeat of coating even in the case an acrylic resin powder is used.

Still another aim of the invention is to provide a coating with suppressed spit seeds and giving excellent metallic effect and high luster.

Still another aim of the invention is to provide a flake pigment production method for easily producing a flake pigment for dry blend at a low cost, preferably usable for a powder coating material and giving excellent metallic effect and high luster.

**Means for Solving the Problems**

To solve the above-mentioned problems, the inventor of the invention has come to an idea that in the case of applying a powder metallic coating material by a dry blend method, the content of the flake pigment in the coating material and the content of the flake pigment in the applied coating are required to be as close to each other as possible, that is, an introduction ratio defined by the following equation (3) is required to be as close as possible to 100%.

$$\text{Introduction ratio (\%)} = \text{(content of flake pigment in the applied coating)/(content of}$$

$$\text{flake pigment in the coating material composition}) \times 100(\%) \quad \bullet\bullet\bullet \ (3)$$

Wherein the introduction ratio generally never reaches 100% but is usually a value lower than 100%.

The inventor of the invention has tried to make the introduction ratio as close as possible to 100% by carrying out surface treatment of the flake pigment in various manners and have measured the introduction ratios. Consequently, the inventor of the invention has found that if the charge value of the flake pigment is made coincident with that of a resin powder by coating base particles such as aluminum flakes with a specified film, the above-mentioned introduction ratio becomes close to 100%.

Further, the inventor of the invention has found that, in powder coating materials using an acrylic type resin powder, the reason for the impossibility of hiding a substrate with the flake pigment by a conventional method unless coating is repeated unnecessarily is as follows: that is, since the acrylic type resin powder tends to be charged with positive charge, unlike a polyester type resin powder having tendency to be charged with negative charge, the charge quantity of the resin powder is low to lead to the low adhesion efficiency even if high negative voltage is applied to the coating material in a corona charging manner at the time of electrostatic coating. As a result, in the case of the powder coating material using the acrylic resin powder, the substrate cannot be hidden unless coating is repeated unnecessary if common means is employed.

The inventor of the invention has found that it is preferable to improve the resin powder so as to make the charge value of resin powder be a high negative charge value as well in addition to adjustment of the charge value of the flake pigment and according have accomplished the invention.

That is, the flake pigment of the invention is a flake pigment comprising base particles having a flaky shape and films on the surfaces of the particles containing a charge control agent.

The base particles are preferable to be made of a material containing a metal.

The charge control agent is preferable to contain a negative charge control agent and/or a positive charge control agent. The negative charge control agent may preferably be one or more kinds of agents selected from the group consisting of azo-Cr complexes, salicylic acid-Al complex, and resin type charge control agents having sulfonic acid groups. The positive charge control agent may preferably be one or more kinds of agents selected from the group consisting of Nigrosine of azine type compounds, Nigrosine bases of azine type compounds, Nigrosine derivatives of azine compounds, naphthenic acid metal salts, naphthenic acid quaternary ammonium salt, naphthenic acid alkylamides, higher fatty acid metal salts, quaternary ammonium salts of higher fatty acid, higher fatty acid alkylamides, and quaternary ammonium salts of resin type compound.

A powder metallic coating material of the invention is a powder metallic coating material containing the above-mentioned flake pigment and a resin powder.

It is preferable that relation between a charge value of the flake pigment and a charge value of the resin powder is defined by the following expressions (1) and (2).

$$\left| C_R - C_A \right| \leq 10 \quad \bullet\bullet\bullet \ (1)$$

$$10 \leq \left| C_A \right| \leq 40 \quad \bullet\bullet\bullet \ (2)$$

In the expressions (1) and (2), $C_A$ denotes the charge value ($\mu$C/g) of the flake pigment and $C_R$ denotes the charge value ($\mu$C/g) of the resin powder.

The coating of the invention is a coating obtained by applying the above-mentioned powder metallic coating material to a substrate and thermally hardening the coating material.

The production method of the flake pigment of the invention is a production method of a flake pigment including base particles having a flaky shape and films on the surfaces of the particles, containing a charge control agent, involving the steps of: dispersing the base particles in a good solvent for the charge control agent in which the charge control agent is dissolved; and depositing the films on the surfaces of the base particles by adding a poor solvent for the charge control agent to the good solvent in which the base particles are dispersed.

The production method of the flake pigment of the invention is a production method of a flake pigment including base particles having a flaky shape and films on the surfaces of the particles containing a charge control agent, involving the steps of: producing a mixture by mixing a polymerizable monomer and the charge control agent; and forming the films containing a copolymer resin obtained from the mixture on the surfaces of the base particles.

**Effects of the Invention**

As described below, in the case of a powder metallic coating material using a flake pigment having no film containing a charge control agent, the introduction ratio of the flake pigment into a coating is low as shown in Comparative Examples 1 and 2; the coating brightness is insufficient; spits are formed; and the hiding property of a substrate is inferior.

On the other hand, as mentioned below, in the case the charge values of the flake pigment and the resin powder are adjusted by using the flake pigment having a film containing a charge control agent and/or the resin powder containing the charge control agent, a powder metallic coating material having a high introduction ratio of the flake pigment into the coating, excellent recycling property of the powder metallic coating material, giving sufficiently high brightness to the coating, preventing the coating from spit formation, and capable of excellently hiding a substrate can be obtained.

The flake pigment of the invention is, thus, a flake pigment for dry blend preferably usable for a powder coating material and giving excellent metallic effect and high brightness to a coating.

The powder metallic coating material of the invention is a powder metallic coating material for dry blend by which the flake pigment and the resin powder are scarcely separated at the time of coating and the content alteration of the flake pigment is suppressed before and after coating and which is excellent in the recycling property and capable of hiding substrate by aluminum flakes with no need of unnecessary repeat of coating even in the case an acrylic resin powder is used.

The coating of the invention is a coating showing excellent metallic effect and high brightness with suppressed formation of spit seeds.

The production method of the flake pigment of the invention is a flake pigment production method capable of easily producing a flake pigment for dry blend at a low cost which is preferably usable in a powder coating material and gives excellent metallic effect and high luster to a coating.

**Best Modes for Carrying Out the Invention**

Hereinafter, the invention will be described more in detail along with preferable embodiments of the invention.

<Flake pigment and production method thereof>

A flake pigment of the invention comprises base particles having a flaky shape and films containing a charge control agent on the surfaces of the particles.

The base particles having a flaky shape to be used for the flake pigment of the invention are not particularly limited and may include flakes made of materials containing metals such as aluminum, zinc, copper, bronze, nickel, titanium, and stainless steel and flakes of their alloys. Among these particles, aluminum flakes are excellent in metallic luster and economical and have a low specific gravity and therefore they are particularly preferable.

Generally, the average particle size of the aluminum flakes to be used for the above-mentioned base particles is preferably in a range of 1 to 100 $\mu$m and more preferably in a range of 3 to 60 $\mu$m. If the average particle size exceeds 100 $\mu$m, the aluminum flakes possibly extrude out of the coating surface to deteriorate the smoothness of the coating and the clearly reflecting property, and if the average particle size is smaller than 1 $\mu$m, the metallic effect or the brightness tends to be decreased.

Generally, the average thickness of the aluminum flakes to be used for the base particles is preferably in a range of 0.01 to 5 $\mu$m and more preferably in a range of 0.02 to 2 $\mu$m. If the thickness exceeds 5 $\mu$m, the smoothness of the coating and the clearly reflecting property tend to be deteriorated and in addition, it sometimes increases the production cost, and if the average thickness is thinner than 0.01 $\mu$m, not only the strength tends to be decreased in some cases but also, the processing during the production process sometimes becomes difficult.

The average particle size of the base particles can be measured by calculating a volume average from a particle size distribution measured by a conventional particle size distribution measurement method such as a laser diffraction method, a micro-mesh sieving method, and a Coulter counter method. The average thickness is calculated from the hiding power and the density of the flake pigment.

A milling aid to be added at the time milling may be adsorbed on the surface of the aluminum flakes used as the base particles. The milling aid may include fatty acids (oleic acid and stearic acid), aliphatic amines, aliphatic amides, aliphatic alcohols, ester compounds, and the like. They suppress unnecessary oxidation on the surfaces of the aluminum flakes and are effective to improve the luster. The adsorption amount is preferably less than 2 parts by mass to the aluminum flakes 100 parts by mass. In the case it is 2 parts by mass or higher, the surface luster may possibly be decreased.

To provide colorful colors to the base particles to be used in the invention, various kinds of coloring agents and coloring pigments may be adhered to the surfaces of the base particles. The coloring agents and coloring pigments are not particularly limited and may include quinacridone, diketopyrrolopyrrol, isoindolinone, indanthrone, perylene, perinone, anthraquinone, dioxazine, benzoimidazolone, triphenylmethane quinophthalone, anthrapyrimidine, chrome yellow, pearl mica, transparent pearl mica, colored mica, interference mica, phthalocyanine, halogenated phthalocyanine, azo pigments (e.g. azomethine metal complexes, condensed azo), titanium oxide, carbon black, iron oxide, copper phthalocyanine, condensed polycyclic pigments, and the like.

A method for applying a coloring pigment to the base particles to be used in the invention is not particularly limited and it is preferably exemplified a method comprising coating the coloring pigment with a dispersant and adhering the coloring pigment to the base particles by mixing and stirring the base particles with the pigment in a non-polar solvent. The dispersant preferably usable for that may include aromatic carboxylic acids such as benzoic acid, vinyl benzoate, salicylic acid, anthranilic acid, m-aminobenzoic acid, p-aminobenzoic acid, 3-amino-4-methylbenzoic acid, 3,4-diaminobenzoic acid, p-aminosalicylic acid, 1-naphthoic acid, 2-naphthoic acid, naphthenic acid, 3-amino-2-naphthoic acid, cinnamic acid, and aminocinnamic acid; amino compounds such as ethylenediamine, trimethylenediamine, tetramethylene diamine, pentamethylenediamine, hexamethylenediamine, 1,7-diaminoheptane, 1,8-diaminooctane, 1,10-diaminodecane, 1,12-diaminododecane, o-phenylenediamine, m-phenylenediamine, p-phenylenediamine, 1,8-diaminonaphthalene, 1,2-diaminocyclohexane, stearylpropylenediamine, N-β-(aminoethyl)-γ-aminopropyltrimethoxysilane, and N-β-(aminoethyl)-γ-aminopropylmethyldimethoxysilane; and aluminum or titanium chelate compounds.

Similarly, to give colorful colors to the base particles to be used in the invention, an interference film may be formed on the surfaces of the base particles. A method for that is not particularly limited and methods for forming a light interfering oxidation film on the respective surfaces of base particles comprising metal flakes may preferably be a method comprising forming an air oxidation film on the surfaces by heating the base particles of the metal flakes at about 300 to about 700°C in an atmosphere with a controlled oxygen concentration, and a method comprising carrying out thermal decomposition of the base particles of flaky metal pigments coated with a precursor of an oxide of a transition metal or the like.

Also, to give chemical resistance, water-proofness, or weathering resistance to the base particles to be used in the invention, base particles coated with a resin layer on the surfaces are preferable to be used. A method for forming the resin layer on the surfaces of the base particles is not particularly limited and may be preferably a method comprising depositing a polymer on the metal flake surfaces by adding polymerizable monomers to a slurry containing the base particles dispersed in an organic solvent and polymerizing the monomers by adding a polymerization initiator such as azobisisobutyronitrile, benzoyl peroxide, or the like while heating it in an inert gas atmosphere.

Examples usable as the polymerizable monomers are acrylic acid, methacrylic acid, methyl methacrylate, butyl acrylate, 2-ethylhexyl acrylate, lauryl acrylate, stearyl acrylate, cyclohexyl acrylate, 2-hydroxyethyl acrylate, 2-hydroxybutyl acrylate, 2-methoxyethyl acrylate, 2-diethylaminoethyl acrylate, butyl methacrylate, octyl methacrylate, 1,4-butanediol diacrylate, 1,6-hexanediol diacrylate, 1,9-nonanediol diacrylate, neopentyl glycol diacrylate, tripropylene glycol diacrylate, tetraethylene glycol diacrylate, trimethylolpropane triacrylate, tetramethylolmethane tetraacrylate, pentaerythritol triacrylate, tris(acryloxyethyl)phosphate, ditrimethylolpropane tetraacrylate, styrene, α-methylstyrene, vinyltoluene, divinylbenzene, acrylonitrile, methacrylonitrile, vinyl acetate, vinyl propionate, maleic acid, crotonic acid, itaconic acid, polybutadiene, linseed oil, soybean oil, epoxylated soybean oil, epoxylated polybutadiene, cyclohexene vinyl monoxide, divinylbenzene monoxide, and the like.

As the base particles to be used in the invention, one or more kinds of base particles having flaky shapes of such as mica, surface-colored mica, glass flakes, surface colored glass flakes, pearl, alumina flakes, colored alumina flakes, silica flakes, colored silica flakes, iron oxide flakes, graphite flakes, hologram pigment flakes, and cholesteric liquid crystalline polymer may be used, and used in combination with the above-mentioned base particles of metal flakes.

Some kinds of means are applicable for a production method of the flake pigment of which base particles are coated with a film containing the charge control agent on the surfaces and the means will be described below. However, the production method of the flake pigment of the invention should not be limited to the following exemplified methods.

One is a method, generally so-called coacervation method (phase separation method). In this method, at first a solution containing a commercialized solvent-soluble charge control agent dissolved in a good solvent having a high dissolution capability is produced. The base particles to be coated are dispersed in the solution and stirred to be in suspended state.

Further, a poor solvent in which the charge control agent is not dissolved is added dropwise to and dispersed in the slurry in the suspended state to deposit a film of the charge control agent on the surfaces of the base particles. The solvent in which the charge control agent to be dissolved at first may be selected in accordance with the composition of the charge control agent and the solvent with a high dissolving power herein generally means solvents with high polarity.

Examples of such a good solvent may be ester type solvents such as butyl acetate, ethyl acetate, and methyl acetate; ketone type solvents such as methyl ethyl ketone and acetone; aromatic solvents such as xylene, benzene, toluene, and chlorobenzene; and cyclo compound type solvents such as cyclohexane and cyclohexanone.

Examples of the poor solvent to be added to deposit the charge control agent on the surfaces of the base particles may be alkanes such as pentane, hexane, heptane, octane, nonane, and decane; and isoparaffins such as isopentane, isohexane, isoheptane, and isooctane.

After the above-mentioned poor solvent is added, the good solvent is removed by means of vacuum distillation or the like to complete the deposition of the film on the surface of the base particles. In this method, it is preferable that the good solvent to be used at first is a solvent having a low boiling point and easy to be removed by distillation, and that the poor solvent is a solvent having a high boiling point so as not to be evaporated even in vacuum distillation.

Practically, solvents with too low boiling points are not so much desirable for use as the good solvent in terms of the safety and those having a boiling point of 50°C or higher are practically usable. As the poor solvent are usable alkane type or isoparaffin type aliphatic solvents having a boiling point in a range of 140 to 210°C.

The charge control agent to be used for coating the surface of the base particles may be, as negative charge control agent, azo-Cr complex, salicylic acid Al complex, and resin type charge control agents containing sulfonic acid group, and in terms of prevention of deterioration of the metallic effect of the base particles, the charge control agent is preferably a substance itself excellent in transparency and from this point of view, the salicylic acid Al complex and resin type charge control agents containing sulfonic acid group are preferable to be used.

The charge control agent to be used for coating the surface of the base particles may be, as positive charge control agent, Nigrosine of azine type compounds, Nigrosine bases of azine type compounds, Nigrosine derivatives of azine compounds, naphthenic acid metal salts, naphthenic acid quaternary ammonium salts, naphthenic acid alkylamides, higher fatty acid metal salts, quaternary ammonium salts of higher fatty acid, and higher fatty acid alkylamides, quaternary ammonium salts of resin type compounds, and the like. Among them, in terms of excellent transparency, quaternary ammonium salts of the above-exemplified compounds are preferable to use.

The above-mentioned positive and negative charge control agents may be used solely, however, it is more preferable to use them in form of a mixture since fine adjustment is made possible by mixing them in order to obtain a finished coating with excellent metallic effect with 100% introduction ratio.

Although depending on the types of the charge control agent, generally assuming 100 parts by mass of the base particles, the coating amount (content) of the charge control agent to the base particles in the flake pigment, is preferably in a range of 0.1 to 5.0 parts by mass and more preferably in a range of 0.2 to 3.0 parts by mass. If the content is lower than 0.1 part by mass, the charge control function tends to be insufficient, and if it exceeds 5.0 parts by mass, coagulation of the base particles may possibly be caused and the coating physical properties may possibly be deteriorated.

Another means of coating the surfaces of the base particles to be used in the invention with a film containing the charge control agent may be a method comprising adding a compound usable as the negative charge control agent for adjusting the charge value to polymerizable monomers forming a resin layer at the time of formation of the resin layer giving chemical resistance, water-proofness, or weathering resistance to the surface of the base particles and forming a three-dimensionally crosslinked film containing a copolymer resin of the polymerizable monomers on the surfaces of the base particles.

For example, in the case the base particles are coated with an acrylic resin layer, it is preferable to carry out three-dimensionally crosslinking of the film containing the copolymer resin of conventionally known polymerizable monomers with 2-acrylamido-2-methylpropanesulfonic acid giving negative charge controllability on the surface of the base particles of metal flakes.

An organic solvent to be used properly for dissolving the above-mentioned polymerizable monomers may be dipropyleneglycol monomethyl ether or propyleneglycol monomethyl ether. In this case the copolymerization ratio is proper to control the ratio of the compound such as 2-acrylamido-2-methylpropanesulfonic acid giving negative charge property to be 5% by weight or so, however it is sometimes adjusted in accordance with the charge value of the resin powder, the counterpart to be used at the time of dry blending and therefore, it is not necessarily limited as described above.

On the other hand, in the case positive charge property is given to the film formed on the base particles, it is preferable that a film containing a copolymer resin to be formed by polymerizing a composition obtained by adding, for example, a dialkylaminoalkyl (meth)acrylate to the above-mentioned polymerizable monomers is previously formed on the base particles of metal flakes and then the formed copolymer resin is quaternalized with p-toluenesulfonic acid alkyl esters such as methyl p-toluenesulfonate.

The amount of the methyl p-toluenesulfonate to be used for the quaternalization is properly 1 mole per mole of dialkyl monoalkyl (meth)acrylate and the like contained in the copolymer resin. In this case also, an organic solvent to be used for dissolving the polymerizable monomers is preferably dipropyleneglycol monomethyl ether or propyleneglycol monomethyl ether.

A polymerization initiator to be used in this case may be organic peroxides such as tert-butyl peroxide, acetyl peroxide, benzoyl peroxide, and lauroyl peroxide and azo compounds such as azobisisobutyronitrile.

<Powder metallic coating material>

A powder metallic coating material of the invention contains the flake pigment of the invention and a resin powder.

With respect to the powder metallic coating material of the invention, in order to keep the introduction ratio of the flake pigment used in the invention at 100% and form a coating with excellent metallic effect, it is required to use the flake pigment to be contained in the film of a substance having the charge controllability (the charge control agent) on the surfaces of base particles. Further, it is preferable that the charge value of the flake pigment and the charge value of the resin powder have a relation as defined by the following expressions (1) and (2).

$$\left| C_R - C_A \right| \leq 10 \quad \bullet \bullet \bullet (1)$$

$$10 \leq \left| C_A \right| \leq 40 \quad \bullet \bullet \bullet (2)$$

In the expressions (1) and (2), $C_A$ denotes the charge value (unit: $\mu$C/g) of the flake pigment and $C_R$ denotes the charge value (unit: $\mu$C/g) of the resin powder.

At the time of electrostatic coating with the powder coating material, in a most commonly employed corona charging method, high voltage about -80 kV is applied to the coating material and an object to be coated is kept positive. On the other hand, in the case of a tribo-charging method, the coating material is charged to be positive and the object to be coated is charge to be negative.

The charge value of the resin powder to be used for the powder coating material is kept in a range of -50 $\mu$C/g to 10 $\mu$C/g in the case of polyester type resins and acrylic type resins, which are used in many cases. The charge value of the polyester resin powder used most commonly is about -22$\mu$C/g. On the contrary, the charge value of the aluminum flakes bearing a resin layer on the surfaces, which are used commonly for a powder metallic coating material, is in a range about -4 to -8 $\mu$C/g and to adjust the charge values of the flake pigment and the resin powder so as to satisfy the above-mentioned expression (1), it is required to adjust the charge value of the surface of the flake pigment comprising the base particles of aluminum flakes with the negative charge control agent.

If the value of $|C_R-C_A|$ exceeds 10 $\mu$C/g in the expression (1), the separation phenomenon of the flake pigment and the resin powder tends to occur easily and the design property of the coating may possibly decreased and the introduction ratio tends to change, and consequently, if the coating material is recovered and used again, the color tone is changed and recycling of the coating material practically impossible.

Since the resin powder of the powder coating material is determined generally in consideration of the weathering resistance, strength, and appearance of the coating, the charge value of the flake pigment is adjusted so as to satisfy the expression (1), however in the case the charge values of both of the resin powder and the flake pigment contained in the powder metallic coating material are low and almost zero, the adhesion efficiency of the coating material itself to the object to be coated is decreased and the coating material is lost much and therefore, it is preferable to satisfy the expression (2).

If the value of $|C_A|$ is less than 10 $\mu$C/g, the adhesion efficiency of the flake pigment to the object to be coated tends to be lowered at the time of electrostatic coating and on the contrary, if it exceeds 40 $\mu$C/g, the flake pigment may possibly coagulate at the time of charge control agent coating treatment.

In the case of using a common acrylic resin powder, the resin powder itself has a charge value of about 10 $\mu$C/ g in the form of flakes and in such a state, the adhesion efficiency of the resin powder is decreased and the deposited coating thickness is decreased in the case of normal discharge patterns and the substrate-hiding property is decreased. In such a case, in addition to adjustment of the charge value of the flake pigment so as to satisfy the both expressions (1) and (2), it is preferable to improve the resin powder so as to obtain high negative charge value.

Although many types of apparatuses such as a blow-off type, a suction type or the like are made commercially available as an apparatus for measuring the charge values of the resin powder and the flake pigment to be used in the invention, a blow-off charge value measurement apparatus TB-200 manufactured by Toshiba Chemical Products Co., Ltd., which is most popular, was used for investigation in Examples described below. These apparatuses are for electrically measuring the charge quantity by mixing a powder such as ferrite called as a carrier and a powder sample for generating electric charge by friction and measuring the charge quantity of the carrier separated by blow off or suction in a Faraday cage. Accordingly, the absolute value of the charge quantity differs depending on the type of the apparatus and the type of the carrier employed, the tendency of the charge value of each sample is never reversed depending on the measurement condition.

The resin powder to be dry blended with the flake pigment comprising the base particles coated with the charge control agent-containing film prepared by various methods may be alkyd resin powders, urea resin powders, melamine resin powders, phenol resin powders, and ebonite powders besides the above-mentioned acrylic resin powders and polyester resin powders. The polyester resin powders may include those curable with epoxy resins, isocyanate (urethane type), and primide (primide type).

Thermosetting type resin powders to be used in the invention may contain various kinds of coloring agents such as quinacridone, diketopyrrolopyrrol, isoindolinone, indanthrone, perylene, perinone, anthraquinone, dioxazine, benzoimidazolone, triphenylmethane quinophthalone, anthrapyrimidine, chrome yellow, pearl mica, transparent pearl mica, colored mica, interference mica, phthalocyanine, halogenated phthalocyanine, azo pigments (e.g. azomethine metal complexes, condensed azo), titanium oxide, carbon black, iron oxide, copper phthalocyanine, condensed polycyclic pigments, and the like.

Addition of these coloring agents makes it possible to obtain more clear metallic coating. The addition amount of these coloring agents differs depending on the type, and it is preferable to be set to an extent that the characteristics of the flake pigment of the invention are advantageously utilized and the smoothness and clearly reflective property of the coating surface are not deteriorated.

Besides the above-mentioned coloring agents, the following various kinds of additives and various kinds of functional materials may be added to the resin powder to be used for the invention: various kinds of fillers such as bentonite, alumina white, calcium carbonate, barium sulfate, and talc; various kinds of fluidity control agents such as silica, alumina and aluminum hydroxide; various kinds of flow expanding agent such as acrylic oligomers and silicone; various kinds of foaming preventing agents such as benzoin; waxes, coupling agents, antioxidants, magnetic powders, stabilizers, ultraviolet absorbents, leveling agents, tackifiers, and precipitation preventing agents.

The average particle diameter of the resin powder to be used in the invention is not particularly limited and generally preferably in a range of 5 to 100 $\mu$m and more preferably in a range of 15 to 60 $\mu$m. If the average particle diameter is smaller than 5 $\mu$m, it becomes difficult to evenly mix the powder with the flake pigment and also becomes so coagulative as to make uniform powdering impossible in some cases at the time of powder coating. If the average particle diameter exceeds 100 $\mu$m, the smoothness of the coating surface is deteriorated to make it impossible to obtain good appearance.

In the powder metallic coating material of the invention, the content of the flake pigment of the invention is preferably 1 part by mass or higher and more preferably 2 parts by mass or higher to the resin powder 100 parts by.mass to be used in the invention. The content is also preferably 40 parts by mass or lower and more preferably 20 parts by mass or lower. If the content is lower than 1 part by mass, sufficient metallic effect or brightness cannot possibly be obtained and the coating thickness has to be thick to hide the substrate. If the content exceeds 40 parts by mass, it results in cost up and the smoothness of the coating is lost and the appearance tends to be worsened.

In the powder metallic coating material of the invention may contain coloring pigments other than the flake pigment and the resin powder of the invention based on the necessity, and examples thereof may be organic pigments such as Quinacridone Red, Phthalocyanine Blue, Phthalocyanine Green, Isoindolinone Yellow, carbon black, perylene, and Azo lake, and inorganic pigments such as iron oxide, titanium oxide, cobalt blue, zinc flower, ultramarine, chromium oxide, mica, and chrome yellow. One or more kinds of these pigments may be used.

The powder metallic coating material of the invention may further contain ultraviolet absorbents, static eliminators, dispersants, antioxidants, brighteners, surfactants, synthetic preservers, lubricants, plasticizers, hardeners, fillers (reinforcing materials), and the like.

<Coating>

A coating of the invention is a coating obtained by applying the above-mentioned powder metallic coating material to a substrate in powder coating, and thermally curing the material.

A method for applying the powder metallic coating material of the invention is preferably carried out by blasting in advance the surface to be coated, then performing conventionally known treatment such as chemical conversion or the like, successively applying the powder metallic coating material, and thereafter thermally curing the coating material.

An object to be coated (substrate) with the powder metallic coating material of the invention is not particularly limited and the object is preferably those which are not deformed or denatured by baking. For example, conventionally known materials containing metals such as iron, copper, aluminum, and titanium and alloys can be exemplified as preferable examples. The practical forms of the substrates may be automotive bodies, office apparatuses, domestic goods, sports goods, construction materials, electric products, and the like.

The method for adhering the powder metallic coating material of the invention to the substrate surface may be a fluidizing immersion method, an electrostatic powder coating material, and the like and the electrostatic powder coating method is excellent in the adhesion efficiency and therefore preferable. The electrostatic powder coating method may be carried out by using a conventionally known method such as corona electric discharge or friction charging.

The heating temperature at the time of baking may be set properly depending on the type of the resin powder to be used and generally it is preferably in a range of 120 to 230°C and more preferably 150 to 230°C. If the heating temperature is lower than 120°C, the crosslinking reaction (curing) tends to be promoted insufficiently to fail to obtain desired coating physical properties and if the heating temperature exceeds 230°C, the resin tends to become yellowish or brittle.

The heating duration in the case of thermal curing by baking the powder metallic coating material of the invention may be set properly depending on the type of the resin powder and the heating temperature and generally, it is preferably 1 minute or longer and more preferably 5 minutes or longer. Also, the heating duration is preferably 40 minutes or shorter and more preferably 30 minutes or shorter.

In the case the heating duration is shorter than 1 minute, the crosslinking reaction (curing) tends to be promote insufficiently to fail to obtain desired coating physical properties and if the heating duration exceeds 40 minutes, the resin tends to become yellowish or brittle. The thickness of the coating to be formed by the heating is not particularly limited and in general, it is preferably in a range of 20 to 100 $\mu$m.

Hereinafter the invention will be described more in detail with reference to Examples, however it is not intended that the invention be limited to the illustrated

Examples.

<Example 1 >

An aluminum powder PCF7670A for powder coating (manufactured by Toyo Aluminum K.K.) 30 g as base particles having a flaky shape was added to a solution obtained by dissolving a resin type charge control agent for negative charge Acrybase FCA-1001-NS (manufactured by Fujikura Kasei Co., Ltd.) 0.15 g as an agent for forming a film containing a charge control agent in ethyl acetate 240 g in a 1-liter separable flask and kept stirring at 350 rpm to uniformly disperse the slurry.

While the stirring state being kept, an isoparaffin solvent (Isosol 300, manufactured by Nippon Petrochemicals Co., Ltd.) having a boiling point of 173 to 189°C 360 g was gradually dropwise added over 1 hour to deposit a resin film containing the charge control agent on the aluminum flakes as the base particles. Further, while the stirring state being kept, vacuum drying was carried out at 60°C for removing only ethyl acetate.

The resulting slurry was dried on a Buchner funnel and further washed with n-hexane 100 g. After washing with hexane was repeated three times, vacuum suction filtration was carried out for complete drying for 3 hours and the obtained dried product was passed through a screen with 105 $\mu$m meshes to obtain a flake pigment bearing a coating film having a charge control function, that is a flake pigment of the invention comprising base particles having a flaky shape and a film containing the charge control agent coated on the surface of the base particles.

The PCF7670A is aluminum flakes coated with an acrylic resin film with D50 =18 $\mu$m (metal content 77%). D50 means an average particle size and is a value calculated by putting droplets of a dispersion obtained by dispersing a sample about 0.1 g in a 0.5% aqueous solution of Triton X (surfactant, manufactured by UNION CARBIDE Corporation) 5 g using water as a solvent, on Microtrac 9320 X-200 manufactured by Honeywell Co. and dispersing using ultrasonic (40 W, 10 seconds) and carrying out measurement.

The obtained flake pigment 9 g and a polyester type resin powder for a powder coating material (Teodur PE 785-900, D50=49 $\mu$m, manufactured by KUBOTAKASHI PAINT Co., Ltd.) 150 g were well dispersed by dry blending method to obtain a powder metallic coating material, and the coating material was applied to a substrate at an applied voltage of 80 kV, using a corona discharge type electrostatic powder coating apparatus (trade name: MXR-100VT-mini; manufactured by MATSUO SANGYO Co., Ltd.). After that, baking was carried out at 190°C for 20 minutes to produce a coated plate. The plate was subjected to the brightness, $\beta/\alpha$, measurement as a gauge showing the metallic effect particular for the flake pigment of the coating.

Simultaneously, to measure the introduction ratio of the flake pigment, the powder coating material adhering to the coated plate was scratched and sampled in an amount of 1 g without baking the powder coating material. The resin of the sampled powder coating material was dissolved in N-methylpyrrolidone and dried by filtration to recover only the flake pigment. In this case, to promote the drying, final washing with acetone and drying were carried out. The introduction ratio was calculated according to the expression (3) from the weight of the obtained flake pigment with a weight method.

To confirm the effect on spits, the coating material by dry blend same as described above was continuously sprayed for 1 minute in the same condition and the deposition state of the powder coating material to electrodes was observed with eye observation and in the case the deposition amount is high, ○ is marked: in the case the deposition was more or less observed, Δ is marked: and in the case the deposition is slight, × is marked.

The hiding property to a substrate was evaluated based on eye observation as follows: ○ for complete hiding, × for insufficient hiding and the substrate was seen and Δ for a state intermediate between the former states, i.e., hiding the substrate to a certain extent although the hiding was insufficient.

<Example 2>

A flake pigment was obtained in the same manner as in Example 1, except that as a charge control agent, a resin type charge control agent for negative charge Acrybase FCA 1001-NS (manufactured by Fujikura Kasei Co., Ltd.)

for 0.20 g and a resin type charge control agent for positive charge Acrybase FCA-201-PS (manufactured by Fujikura Kasei Co., Ltd.) 0.10 g were used. After that, using the flake pigment, a powder metallic coating material and a coating were produced in the same methods as in Example 1 and the introduction ratio, coating brightness, spit formation state, and the substrate-hiding property were evaluated.

<Example 3>

A flake pigment was obtained in the same manner as in Example 1, except that as a charge control agent, a resin type charge control agent for negative charge Acrybase FCA-1001-NS (manufactured by Fujikura Kasei Co., Ltd.) 0.3 g was used. Meanwhile, for containing the charge control agent, 2 wt% a resin type charge control agent for negative charge Acrybase FCA-1001-NS (manufactured by Fujikura Kasei Co., Ltd.) was added to a resin powder for an acrylic powder coating material (Teodur AC793-8689, D50=45 $\mu$m, manufactured by KUBOTAKASHI PAINT Co., Ltd.), mixed for 10 minutes by a mixer and melted, and dispersed in a melting and kneading apparatus, and the resulting mixture was finely pulverized by a jet mill and classified by air blow to obtain a resin powder for a powder coating material with an average particle diameter of 43 $\mu$m. The obtained resin powder containing the charge control agent was mixed with the previously produced flake pigment coated with the charge control agent and in the same manner as in Example 1, a powder metallic coating material and a coating were produced and the introduction ratio, the coating brightness, spit formation state, and the substrate-hiding property were evaluated.

<Example 4>

| | |
|---|---|
| Epoxylated 1,2-polybutadiene | 3.75 g, |
| trimethylolpropane triacrylate | 8.7 g, |
| acrylic acid | 0.8 g, |
| divinyl benzene | 3.5 g, |
| 2-acrylamido-2-methylpropanesulfonic acid | 0.89 g, |
| dipropyleneglycol monomethyl ether | 1,120 g, and |
| untreated aluminum paste *1 | 141 g |

They were fed to a 2-liter, four-necked flask, and well mixed and stirred while nitrogen gas was introduced. * 1: 7670M metal content 71%, manufactured by Toyo Aluminum K.K.

The temperature of the mixture was increased to 80°C and azobisisobutyronitrile 0.6 g was added and under continuously stirring condition, reaction was carried out at 80°C for 6 hours. The obtained slurry-like dispersion was dried on a Buchner funnel and thereafter, in the same manner as in Example 1, final flake pigment was obtained and in the same method as in Example 1, a powder metallic coating material and a coating were produced and the introduction ratio, the coating brightness, spit formation state, and the substrate-hiding property were evaluated.

<Example 5>

A flake pigment was obtained in the same manner as in Example 1, except that a resin type charge control agent for negative charge Acrybase FCA-1001-NS (manufactured by Fujikura Kasei Co., Ltd.) was added in an amount of 0.3 g. After that, a coated plate was produced for color tone evaluation in the same manner as in Example 1 and the introduction ratio and spit formation state were evaluated similarly.

<Comparative Example 1>

Evaluation was carried out in the same manner as in Example 1, except that as aluminum flakes to be used for a coating material, PCF7670A before the coating treatment with the charge control agent (that is, a flake pigment containing no charge control agent) was used.

<Comparative Example 2>

Evaluation was carried out in the same manner as in Comparative Example 1, except that as a resin powder for a thermosetting powder coating material to be used for a coating material, an acrylic resin powder for the powder coating material (Teodur AC793-8689, D50=45 μm, manufactured by KUBOTAKASHI PAINT Co., Ltd.) was used.

<Other common evaluation items>

The following common items of Examples 1 to 5 and Comparative Examples 1 and 2 were evaluated.

(1) Evaluation of the brightness of coating

In Examples and Comparative Examples, the brightness of the coatings was evaluated based on evaluation parameter β/α. Herein, the aluminum flake was used as the base particles for flake pigments and in the case of silver metallic type coatings containing no coloring pigment, β/α≥110 is desirable. The evaluation parameter, that is β/α was deduced from the following expression (4):

$$L = [\beta/(\theta^2 + \alpha)] + \gamma \quad \bullet \bullet \bullet (4)$$

wherein L denotes a lightness index (L*a*b* colorimetric system (colorimetric system based on even color space determined by CIE in 1976)) measured at an observation angle θ using a spectrophotometer (trade name: X-Rite MA68, manufactured by X-Rite Inc.); θ denotes an observation angle; and α, β, and γ denote constants.

The first item $[\beta/(\theta^2 + \alpha)]$ in the right side of the expression (4) corresponds to the directional scattering characteristic for metallic coating depending on the observation angle θ and the second item γ corresponds to isotropic scattering independent on the observation angle θ. The visual brightness is well correlated with L value, that is β/α, at the regular reflection position (θ = 0) of the directional scattering and therefore, the β/α was used as the evaluation parameter of the brightness.

To calculate β/α, at first it is required to determine α, β, and γ. In the invention, at first the L value was actually measured at observation angles θ at 15°, 25°, 45°, 75°, and 110° and the observation angles θ and L values are assumed to follow the above-mentioned expression (4) and α, β, and γ are determined by the minimum square calculation.

(2) Charging property

After each object flake pigment comprising aluminum flakes as the base particles or each resin powder for a powder coating material was mixed with an acryl-coated ferrite carrier (FB100, manufactured by Powder Tech. Co., Ltd.) at 3 : 97 at 200 rpm for 10 minutes to cause friction charge and the charge value (μC/g) was measured by A blow-off powder charge value measurement apparatus TB-200, manufactured by Toshiba Chemical Products Co., Ltd.

<Evaluation results>

The mixture compositions of Examples and Comparative Examples are shown in Table 1 and the evaluation results are shown in Table 2.

Table 1 Mixture composition of powder metallic coating material

| | | Coating composition | | | | Type of resin powder |
|---|---|---|---|---|---|---|
| | | Charge control agent | | Content of charge control agent | | |
| | | Resin powder | Aluminum flakes | To resin powder (wt%) | To metal of aluminum flakes (wt%) | |
| | Example 1 | - | Negative | - | 0.65 | Polyester |
| | Example 2 | - | Positive / Negative | - | 1.30 | Polyester |
| | Example 3 | Negative | Negative | 2.00 | 1.30 | Acrylic resin |
| | Example 4 | - | Negative | - | 0.89 | Polyester |
| | Example 5 | - | Negative | - | 1.30 | Polyester |

Table continued

| | Coating composition | | | | Type of resin powder |
| | Charge control agent | | Content of charge control agent | | |
| | Resin powder | Aluminum flakes | To resin powder (wt%) | To metal of aluminum flakes (wt%) | |
|---|---|---|---|---|---|
| Comparative Example 1 | - | - | - | - | Polyester |
| Comparative Example 2 | - | - | - | - | Acrylic resin |

Table 2 Evaluation results of powder metallic coating material

| | Charge value (μC/g) | | $|C_R-C_A|$ (μC/g) | Introduction ratio (%) | Coating brightness (β/α) | Spit formation state | Substrate-hiding property |
| | Resin powder | Flake pigment | | | | | |
|---|---|---|---|---|---|---|---|
| Example 1 | -22.2 | -22.0 | 0.2 | 129 | 163 | O | O |
| Example 2 | -22.2 | -19.8 | 2.4 | 101 | 154 | O | O |
| Example 3 | -20.9 | -29.2 | 8.3 | 105 | 155 | O | O |
| Example 4 | -22.2 | -21.4 | 0.8 | 109 | 158 | O | O |
| Example 5 | -22.2 | -29.2 | 7 | 140 | 174 | O | O |
| Comparative Example 1 | -22.2 | -6.4 | 15.8 | 73 | 134 | × | Δ |
| Comparative Example 2 | 9.0 | -6.4 | 15.4 | 50 | 103 | × | Δ |

From Table 1 and Table 2, in the case powder metallic coating materials using the flake pigments having no film containing the charge control agent, as shown in the results of Comparative Examples 1 and 2, it is found that the introduction ratio of the flake pigment to the coating is low and the coating brightness is insufficient and spits are formed and the substrate-hiding property is inferior.

On the other hand, from Table 1 and Table 2, in the case the charge values of the flake pigment and the resin powder were adjusted by using the flake pigment having the film containing the charge control agent and/or the resin powder containing the charge control agent, it is found that a powder metallic coating material having a high introduction ratio of the flake pigment to the coating, excellent in the recycling property of the powder metallic coating material achieving sufficient coating brightness, free from spit formation, and excellent in substrate-hiding property can be obtained.

**Claims**

1. A flake pigment comprising a base particle having flaky shape, and a film containing a charge control agent coated on a surface of said base particle.

2. The flake pigment according to claim 1, wherein said base particle is made of a material containing a metal.

3. The flake pigment according to claim 1, wherein said charge control agent contains a negative charge control agent and/or a positive charge control agent.

4. The flake pigment according to claim 3, wherein said negative charge control agent is one or more compounds selected from the group consisting of Azo Cr complexes, salicylic acid Al complexes, and resin type charge control agents having sulfonic acid group.

5. The flake pigment according to claim 3, wherein said positive charge control agent is one or more compounds selected from the group consisting of Nigrosine of azine type compounds, Nigrosine bases of azine type compounds, Nigrosine derivatives of azine type compounds, naphthenic acid metal salts, naphthenic acid quaternary ammonium salts, naphthenic acid alkylamides, higher fatty acid metal salts, quaternary ammonium salts of higher fatty acid, higher fatty acid alkylamides, and quaternary ammonium salts of resin type compound.

6. A powder metallic coating material comprising the flake pigment of claim 1 and a resin powder.

7. The powder metallic coating material according to claim 6, wherein relation between a charge value of said flake pigment and a charge value of said resin powder is defined by the following expressions (1) and (2):

$$\left| C_R - C_A \right| \leq 10 \quad \bullet \bullet \bullet (1)$$

$$10 \leq \left| C_A \right| \leq 40 \quad \bullet \bullet \bullet (2)$$

where $C_A$ denotes the charge value ($\mu$C/g) of said flake pigment and $C_R$ denotes the charge value ($\mu$C/ g) of said resin powder.

8. A coating obtained by applying the powder metallic coating material of claim 6 to a substrate by powder coating and thermally curing said powder metallic coating material.

9. A production method of a flake pigment including a base particle having flaky shape and a film containing a charge control agent coated on a surface of said base particle, comprising the steps of:

dispersing said base particle in a good solvent for said charge control agent in which said charge control agent is dissolved; and
depositing said film on the surface of said base particle by adding a poor solvent for said charge control agent to said good solvent in which said base particle is dispersed.

10. A production method of a flake pigment including a base particle having flaky shape and a film containing a charge control agent coated on a surface of said base particle, comprising the steps of:

producing a mixture by mixing a polymerizable monomer and said charge control agent; and
forming a film containing a copolymer resin obtained from said mixture on the surface of said base particle.

## INTERNATIONAL SEARCH REPORT

| | International application No. |
|---|---|
| | PCT/JP2004/011684 |

| A. CLASSIFICATION OF SUBJECT MATTER |
|---|
| Int.Cl$^7$ C09C1/62, C09D5/03, 5/30 |
| |
| According to International Patent Classification (IPC) or to both national classification and IPC |

| B. FIELDS SEARCHED |
|---|
| Minimum documentation searched (classification system followed by classification symbols) |
| Int.Cl$^7$ C09C1/62, C09D5/03, 5/30 |
| |

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2003-213157 A (Toyo Aluminium Kabushiki Kaisha),<br>30 July, 2003 (30.07.03),<br>Claims; Par. Nos. [0033] to [0040], [0058] to [0069]<br>(Family: none) | 1-3,5-10<br>4 |
| X<br>Y<br>A | JP 62-283160 A (Toyo Aluminium Kabushiki Kaisha),<br>09 December, 1987 (09.12.87),<br>Claims<br>(Family: none) | 1-3,5-8,10<br>9<br>4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 August, 2004 (31.08.04) | 21 September, 2004 (21.09.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

| | **INTERNATIONAL SEARCH REPORT** | International application No. |
|---|---|---|
| | | PCT/JP2004/011684 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 56-159263 A   (Toyo Aluminium Kabushiki Kaisha),<br>08 December, 1981 (08.12.81),<br>Claims<br>(Family: none) | 1-3,5-8,10<br>9<br>4 |
| X<br>Y<br>A | JP 2001-329226 A   (Toyo Aluminium Kabushiki Kaisha),<br>27 November, 2001 (27.11.01),<br>Claims<br>& EP 1134264 A1        & US 200131817 A | 1-3,5-8<br>9<br>4,10 |
| X<br>Y<br>A | JP 2000-160053 A   (Tomoegawa Paper Co., Ltd.),<br>13 June, 2000 (13.06.00),<br>Claims; Par. Nos. [0006], [0010]<br>(Family: none) | 1-3,5-8<br>9,10<br>4 |
| X<br>Y<br>A | JP 2000-160062 A   (Tomoegawa Paper Co., Ltd.),<br>13 June, 2000 (13.06.00),<br>Claims; Par. Nos. [0008], [0015]<br>(Family: none) | 1-3,5-8<br>9,10<br>4 |
| X<br>Y<br>A | JP 2000-160052 A   (Tomoegawa Paper Co., Ltd.),<br>13 June, 2000 (13.06.00),<br>Claims; Par. Nos. [0009], [0019]<br>(Family: none) | 1-3,5-8<br>9,10<br>4 |
| X<br>Y<br>A | JP 56-141367 A   (Asahi Chemical Industry Co., Ltd.),<br>05 November, 1981 (05.11.81),<br>Claims<br>(Family: none) | 1-3,5-8<br>9,10<br>4 |
| X<br>Y<br>A | JP 56-139566 A   (Asahi Chemical Industry Co., Ltd.),<br>31 October, 1981 (31.10.81),<br>Claims<br>(Family: none) | 1-3,5-8<br>9,10<br>4 |
| Y<br>A | JP 57-190055 A   (Adeka Argus Chemical Co., Ltd.),<br>22 November, 1982 (22.11.82),<br>Claims; page 4, upper left column, lines 10 to 17<br>(Family: none) | 9<br>1-8,10 |
| X<br>A | JP 2-251574 A   (Nippon Paint Co., Ltd.),<br>09 October, 1990 (09.10.90),<br>Claims; page 2, lower right column, line 10 to page 3, upper left column, line 5<br>(Family: none) | 1-3,6-8,10<br>4,5,9 |

Form PCT/ISA/210 (continuation of second sheet) (January 2004)